# EUROPEAN PATENT APPLICATION

(11) **EP 1 838 051 A1**
(43) Date of publication of application: **26.09.2007**
(21) Application number: 06006157.9
(22) Date of filing: 24.03.2006
(51) Int. Cl.: H04L 12/56, H04L 12/28, H04L 29/08, H04L 29/06

(54) **User interface for vehicular communications**

(71) Applicant: Hitachi, Ltd., Tokyo (JP)
(72) Inventor: Lenardi, Massimiliano, Dr. Les Grands Logis D, 06600 Antibes (FR); Osafune, Tatsuaki Résidence Fleury, 06400 Cannes (FR)
(74) Representative: Beetz & Partner

(57) **Abstract**

The invention relates to an apparatus and a method for community-based communication between a first mobile node A and at least one second mobile node B, C. The apparatus and method for community-based communication allow to easily build a community, to recognize community members A, B, C in communication range 3101, to display symbols representing recognized community members A, B, C on an on-board screen, and to interact with the community members A, B, C.

## Description

The invention relates to an apparatus and a method for community-based communication between a first mobile node and at least one second mobile node.

In modern communication systems, infrastructureless communication networks are more and more deployed. Very often, infrastructureless communication networks are also combined with infrastructure-based communication networks. Mobile Ad-hoc NETworks (MANET) are the main representative of infrastructureless communication networks. A MANET is a network formed by nodes connected wirelessly by means of radio communication devices. These means include, but are not limited to WLAN, Bluetooth or infrared interfaces. Every node participating in a MANET can act as a client, server or relay for communications established among a set of nodes.

The MANET topology is arbitrary, since every node can move freely and unpredictably, even if eventually along predetermined paths. MANET sizes are kept relatively small, but the number of their nodes can theoretically grow without limits. MANETs can work independently of any infrastructure, even if some of the nodes can be connected to an infrastructure, therefore allowing the rest of the MANET to communicate with; this can be done by using a second radio-interface.

The MANET nodes can be directly radio-connected to all the others or can communicate with non in-range nodes by means of dedicated IP routing protocols, which allow multi-hop communications. These routing protocols can be based on topology rules (proactive or reactive families, like OLSR or AODV) or can relate to other criteria for determining the next hop to an IP destination, like the location of the nodes (georouting). The families of routing protocols used are Unicast (one-to-one), Multicast (one-to-many) and Anycast (one-to-anyone); Broadcast (one-to-all) protocols are used for sending messages to every node of a MANET.

Each MANET node should be self-configuring in terms of which radio interface to use (if multiple present), which Medium Access Control (needed because the wireless medium is "freely" accessible by any node) and which Routing Protocol to run.

When most of the MANET nodes are vehicles, and assuming that proper wireless radio means are installed on each vehicle, such network is then called Vehicular MANET, or VANET. It can be that some nodes of a VANET are in reality (almost) stationary, like cross-lights, roadside gateways, and VANET extensors or even pedestrians.

The main differences between MANETs and VANETs do not concern applications that can be run over them, but technicalities at the lower OSI layers. In particular, the high mobility of the VANET nodes implies advanced access control, topology maintenance and routing procedures; resources of vehicles or infrastructure devices are more important and allow better power and storage management; position services like GPS or Galileo improve node tracking and services; the VANET node mobility is constrained over specific paths, which are digitally available.

Intelligent Transport Systems (ITS) can include solutions that use VANET concepts and technologies for improving road safety, in particular the so-called Active Safety which aims at applications like Driver Assistance/Information or Decentralized Floating Car Data for better traffic flows. But ITS can also deal with solutions for better comfort and/or entertainment for drivers and passengers, like (video-) chatting, Internet connection or driving information.

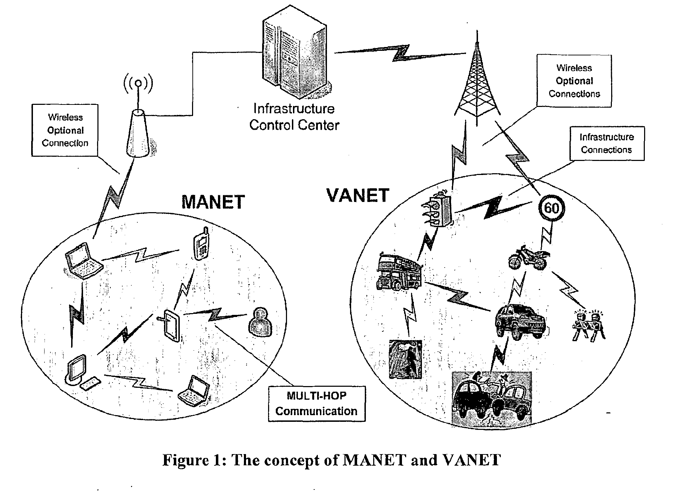

Fig. 1 resumes the concept of MANET and VANET.

In this invention, preferably a VANET is formed among vehicles and vehicular communications are made possible. Vehicles are equipped with some positioning systems (like GPS or Galileo) and they broadcast automatically information on their movements by means of radio devices like 802.11 interfaces. Those broadcast information packets can travel over multi-hop paths by using special algorithms.

Nowadays, ad-hoc networks gather the community attention as means for vehicular communications mainly because of the automatic connection and auto-configuration of the nodes. Applications for VANET communications are largely classified into two kinds: safety applications and comfort applications. Safety applications are the ones in which communication is used to increase the safety of drivers and passengers in vehicles. Collision avoidance is one example in which vehicles know the relative position and the velocity of other vehicles through some communication system, so that some warning is immediately given to the driver, when other vehicles are on the collision trajectory.

Comfort/entertainment applications are used to provide better driving information or to improve on-board life of drivers and passengers, like for example town guidance, points of interest (POIs), video-chatting or internet connections. In the case of comfort applications, the requirements for the communication means are various and application-dependant. It can be required, that high data rates must be supported over long communication distances.

One nowadays very often used comfort/entertainment application within vehicles is navigation. In general, the display of a navigation system shows the surroundings of the car in which the navigation system is deployed and the position of the car on the screen.

Some navigation systems have been proposed that additionally show other vehicles that surround the car in which the navigation system is deployed. If simply all the surrounding vehicles are displayed, the screen becomes crowded. In this case, the driver gets confused. Thus, filtering must be applied in order to provide a value-added to the user of the navigation system.

One filtering mechanism that is known from the prior art, is displaying only vehicles of a certain type. For example, it might be that only ambulances or emergency cars are displayed. The drawback of this approach is that it is very restrictive. It might be that the user wants to have displayed vehicles based on a filtering mechanism that allows more fine-grained filtering. Moreover, the user might want not only to have displayed the vehicles but also to interact with the vehicles.

Thus, an object of the invention is to provide an improved way of filtering for comfort/entertainment applications that are used on mobile nodes. An additional object is to allow for interaction between the mobile node that does the filtering and the mobile nodes that are an element of the set of mobile nodes that results from the filtering.

This object is accomplished by the features of the independent claims. Further aspects and preferred embodiments of the invention are defined by the dependent claims.

According to the invention an apparatus for community-based communication between a first mobile node and at least a second mobile node may be provided. The apparatus includes preferably the first mobile node. The apparatus for community-based communication may comprise a control unit comprising a data processing means, an inputting means, a displaying means, a memory unit and means for communicating between the first mobile node and at least one second mobile node. The control unit may allow to register at least one community member. The memory unit may comprise a list of registered community members. Preferably, the control unit recognizes reachable community members using the means for communicating. The displaying means may display symbols representing recognized community members. Advantageously, the inputting means allows to interact with the displayed symbols. The control unit may perform actions based on the interaction with the displayed symbols.

An advantage of the invention is that the control unit recognizes community members that are reachable via the MANET. Only these community members are displayed by the displaying means. Accordingly, a filtering of community members is performed. Since only community members are displayed by the displaying means, the risk that the user is distracted by the displayed symbols is reduced. The user attention is drawn only to important facts. This is especially important because the invention is preferably used within vehicles.

A further advantage of the invention is that the user may interact with nearby community members using the inputting means and the displayed symbols. Based on the interaction of the user with the displayed symbols, the control unit may perform actions. In this way, for example, the user may set up a voice call to reachable community members or he may send text messages to community members. Based on the invention, numerous distributed applications may be provided.

In a preferred embodiment of the invention the control unit recognizes reachable community members using a filtering mechanism. Preferably the filtering mechanism comprises the steps of receiving at least one message from at least one second mobile node comprising an identification of the mobile node, comparing the identification with the identifications of the community members that are registered in the list of registered community members, determining whether the received message was sent by a registered community member based on the comparison, and/or further processing the received message, if it was sent by a registered community member.

The advantage of this filtering mechanism is that only messages that are sent by community members are further processed. In this way the load on the overall system is reduced.

Advantageously, the control unit not only allows to register a community member, but it further allows to also deregister community members.

Preferably, the deregistering is done in an automatic way. But also a manual way of deregistering community members is preferably provided.

The advantage of the manual deregistration is, that it allows the user to delete community members that the user is no longer interested in. In this way, the user is enabled to set up his own fine-grained filtering rules and to control these rules during the operation of the apparatus.

In a preferred embodiment the inputting means further allows to input an identification of the user of the apparatus, a time of validity of identification of the user, and/or a time of validity of an identification of at least one mobile node. This means, that the user has the possibility to input into the system his identity, like for example his name. The user may further input, how long his identity, and/or the identity of the node he is using, like for example a vehicle, is valid. This information is used to register him and preferably his car at other mobile nodes.

The advantage of this feature is that other nodes, where the user is registered, not only know the name of the node, but they also know the identification of the user of the node and they know how long this identification is valid. This makes it easier for the user of the second mobile node to determine whether he wants to interact with the first mobile node and it makes it easier for the user of the second node to determine for how long he wants to register the counterpart mobile node.

Advantageously, the memory unit stores the identification of the first mobile node, the identification of the user, the time of validity of the identification of the user, and/or the time of validity of the identification of the first mobile node.

Storing the above specified information has the advantage that the information may be used more than once without requiring the user to input the information again. Thus, information that was inputted by the user once may be used for numerous interactions.

According to a very effective mode for carrying out the invention the means for communicating broadcasts the identification of the first mobile node, the identification of the user, the time of validity of the identification of the user, the time of validity of the identification of the first mobile node, and/or options. The options may state, for example, which applications the first mobile node is able to run.

The advantage of broadcasting the above mentioned information is that other reachable nodes are enabled to recognize the presence of the first mobile node and these receiving nodes may decide to register the first mobile node and its user as a community member.

Furthermore, the means for communicating may receive an identification of the second mobile node, an identification of the user of the second apparatus, a time of validity of the identification of the user using the second apparatus, a time of validity of the identification of the second mobile node, and/or options. The options may contain information about the applications that the second mobile node is able to execute.

Receiving messages from other mobile nodes has the advantage that community members can be registered and/or that community members are recognized.

In a preferred embodiment the control unit establishes a communication with a community member that is represented by the symbol with which the user interacted using the inputting means.

In this way, the first mobile node and the second mobile node may communicate with each other. Furthermore, the communication forms a basis for a distributed application that may be run between the first mobile node and the second mobile node. Such a distributed application may be, for example, a voice call, a voice message, a text message, or any other distributed application like, for example, mobile gaming.

The invention further comprises a method for community based communication between the first mobile node and at least one second mobile node. Preferably, the method comprises the steps of registering at least one community member, storing a list of registered community members, recognizing reachable community members, displaying symbols representing recognized community members, interacting with the displayed symbols, and/or performing actions based on the interaction with the displayed symbols.

This method has the advantage that only community members are displayed by the displaying means. In this way only useful information is displayed to the user. This is especially advantageous in situations, where the user attention should not be distracted, like for example while driving a car. Furthermore, the invention allows the user to interact with the community members. By interacting with the displayed symbols, the user can start distributed applications with the community members.

In a preferred embodiment, the step of recognizing reachable community members uses a filtering mechanism. This filtering mechanism preferably comprises the steps of receiving at least one message from at least one second mobile node comprising an identification of the mobile node, comparing the identification with the identifications of the community members that are registered in the list of registered community members, determining whether the received message was sent by a registered community member based on the comparison, and/or further processing the received message, if it was sent by a registered community member.

Using this filtering mechanism is a very easy and effective way of recognizing reachable community members, because messages are only received from reachable community members.

The method for community based communication according to the invention may comprise an automatic registration mode. Preferably, in this automatic registration mode the step of registering at least one community member comprises the steps of searching reachable mobile nodes, receiving at least one message from at least one found mobile node, exchanging at least one identification and/or at least one option with the at least one found mobile node, displaying the at least one identification and/or the at least one option to the user, and/or accepting to register the at least one found mobile node as a community member by the user.

The advantage of this automatic registration mode is that it is very easy for the user to register community members. The searching of reachable mobile nodes is done automatically. Also the exchanging of identifications and options as well as the displaying of the identifications and the options is performed automatically. The user only needs to look at the displayed identifications and options and needs to decide whether he wants to accepts the found mobile nodes as community members or not. This is a very easy and effective way of forming a community.

Preferably, the control unit discards received messages that are received before the starting of searching reachable mobile nodes and/or that are received later than a predetermined period of time after the starting of searching reachable mobile nodes. This means that the control unit accepts identifications and options of potential community members only during a predetermined time frame that starts with the triggering of searching reachable mobile nodes. Preferably, the searching of mobile nodes is triggered by the user by pressing a button that is displayed by the displaying means.

The advantage of discarding messages that are received outside the predetermined time frame is that the user has a better control over the establishment of the community. One scenario how a community could be built is that a couple of friends meet with their vehicles on a parking lot. They decide to build a community. One of them presses a button stating that a community should be built. The other friends now have a predetermined time frame to also press their buttons that they want to become a community member. After the predetermined time frame has elapsed, no further messages are accepted. This makes it easy to build a community only with wanted mobile nodes.

The invention may also comprise a manual registration mode. In the manual registration mode, the step of accepting to register the at least one found mobile node preferably further comprises the steps of selecting one of the at least one found mobile node and/or sending a user identification and a time of validity of the user identification. This means, that the user is enabled not only to accept all mobile nodes that are displayed, but instead he may choose which of the displayed mobile nodes he wants to register as community members.

This has the advantage that the user has the possibility to select community members in a more fine-grained way. In this way, it becomes impossible for mobile nodes to become part of the community without the approval of the other community members. Moreover, the selection process can not be disturbed by mobile nodes that are unwanted by the community members.

In a different way of operation, the step of registering at least one community member may comprise the steps of receiving an invitation to be a member of a community comprising at least one identification and/or a time of validity of the identification and/or at least one option of the inviting node, displaying the at least one identification and/or the time of validity of the identification and/or the at least one option to the user, accepting to register the inviting node as a community member by the user, and/or sending at least one identification and/or the time of validity of the identification and/or at least one option to the inviting node. In this way of operation, the first mobile node does not initiate the building of a community. Instead, the first mobile node simply waits for an invitation. When an invitation is received, the respective node that sent the invitation is displayed by the displaying means. The user may decide to accept to register the inviting node as a community member. In this case, the first node sends its identification and/or the time of validity of the identification and/or its options to the second mobile node.

The advantage of this way of operation is that the user has a further way of building a community. There is no need for him to be the initiating mobile node. Instead, the mobile node can also simply wait for incoming invitations to become a community member. In this way, he can become a community member by simply accepting an invitation. This is a very easy and effective way of becoming a community member.

In a preferred embodiment of the invention the control unit deletes community members from the list of registered community members when the time of validity of the identification of the community members has expired. This means that garbage collection may take place. Expired entries in the list of registered community members are automatically deleted.

This garbage collection mechanism has the advantage that expired and therefore useless information is automatically deleted, so that memory is saved. Moreover, there is no need for the user to delete expired entries.

The user may also manually delete community members from the list of registered community members using the inputting means. For the manual deletion, preferably, the steps of displaying the community members that are registered in the list, selecting at least one community member from the list by the user, and/or triggering a deletion of the at least one selected community member from the list of registered community members are employed.

The manual deletion has the advantage that the user is enabled to remove community members from the list of registered community members that he is no longer interested in, that annoyed the user by sending spam, or that have become useless.

In a preferred embodiment of the invention, the step of displaying symbols representing recognized community members comprises the steps of receiving a position of at least one recognized community member, calculating a position on the display that corresponds to the positions of the at least one recognized community member, and/or displaying at least one symbol representing the at least one recognized community member at the calculated position. The mobile nodes periodically broadcast their position and movements anyway, since this information is necessary for safety applications. The invention reuses this information and filters it, so that only position and movement information of community members is further processed. The position of the community member is mapped on a suitable position on the screen. At this position a symbol is displayed representing the community member.

This has the advantage that the user can see the positions of the other reachable community members on his screen. The positions of the other community members are periodically updated. Thus, the user always sees the up-to-date-positions of the other community members.

Whenever a community member is reachable, but it cannot be displayed on the screen because it is out of the scope of the displayed map, the identification of the community member is listed as a text at one side of the screen.

The invention may also comprise a vehicle including the apparatus as described above. The invention also comprises a computer software product for community-based communication. This computer software product performs at least one step of the above described method. The computer software product may be used on any mobile node. Such a mobile node may be a vehicle, especially a car, a mobile electronic device, a mobile computer, a personal digital assistant, a laptop, a notebook, a smart phone, and/or a mobile phone.

Implementing the invention as a computer software product has the advantage that the invention becomes portable. The computer software product may be used on a wide variety of platforms.

Features, embodiments and particular aspects of the invention are explained in the following with reference to the drawings, in which
Fig. 1 illustrates the basic principal of MANETs and VANETs,
Fig. 2 shows the sequence of screens that a user will see that uses the apparatus for community-based communication according to the invention,
Fig. 3 shows the sequence of screens that a user may see during manual registration,
Fig. 4 shows the navigation screen,
Fig. 5 shows the partner mode screen,
Fig. 6 shows the main registration screen,
Fig. 7 shows the automatic registration main screen,
Fig. 8 shows the automatic registration success screen,
Fig. 9 depicts the automatic registration cancelled screen,
Fig. 10 illustrates the manual registration main screen,
Fig. 11 shows the invitation screen,
Fig. 12 illustrates the first embodiment of the user identification screen,
Fig. 13 shows the input screen,
Fig. 14 depicts the manual community registration success screen,
Fig. 15 shows the application selection screen,
Fig. 16 shows the second embodiment of the user identification screen,
Fig. 17 depicts the validity screen,
Fig. 18 illustrates the potential partners screen,
Fig. 19 shows the potential peer-to-peer partner screen,
Fig. 20 illustrates the manual P2P registration success screen,
Fig. 21 shows the deregistration main screen,
Fig. 22 illustrates the deregistration confirmation screen,
Fig. 23 illustrates one embodiments of the show partners screen,
Fig. 24 shows the potential partners application screen,
Fig. 25 shows one example for the execution of an application,
Fig. 26 illustrates one flow of instructions for receiving messages,
Fig. 27 shows one embodiment of a protocol for automatic registration as a sequence diagram,
Fig. 28 shows one embodiment of the protocol for manual peer-to-peer-registration as a sequence diagram,
Fig. 29 illustrates one embodiment of the protocol for a manual community registration as a sequence diagram,
Fig. 30 shows one embodiment of a list of registered community members,
Fig. 31 shows one scenario of a registration,
Fig. 32 shows the flow of instructions that are executed to perform garbage collection,
Fig. 33 shows one embodiment of the flow of instructions that are needed for displaying partners,
Fig. 34 shows one embodiment of the flow of instructions for filtering, and
Fig. 35 shows one embodiment of an apparatus for community-based communication.

With reference to Fig. 1 the main concepts of MANETs and VANETs are shortly reviewed. Like it can be seen on the left side of Fig. 1, in a MANET mobile nodes communicate with each other using wireless communication technology. The mobile nodes may be laptops, mobile computers, mobile phones or any other mobile equipment. Some of the mobile nodes want to communicate with other mobile nodes that are not directly in their radio range. Thus, they send messages that are relayed by other mobile nodes. In this way, the mobile nodes form a so called mobile ad hoc network (MANET). MANETs may also be combined with infrastructures. In this case, at least one of the mobile nodes has a radio link with a base station that is connected to the infrastructure. A VANET, like it is depicted on the right side of Fig. 1, is a special class of a MANET, in which the mobile nodes are vehicles, cross lights, roadside gateways, traffic signs, or any other means that plays an important role in traffic.

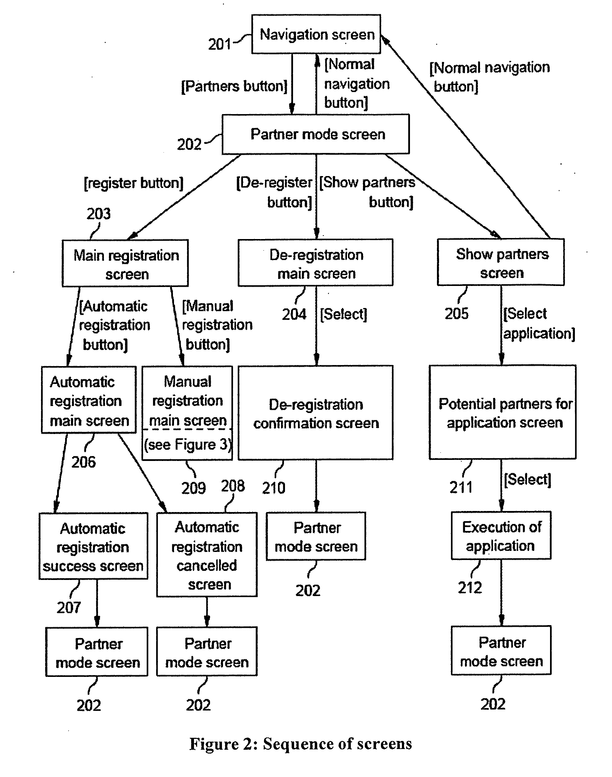

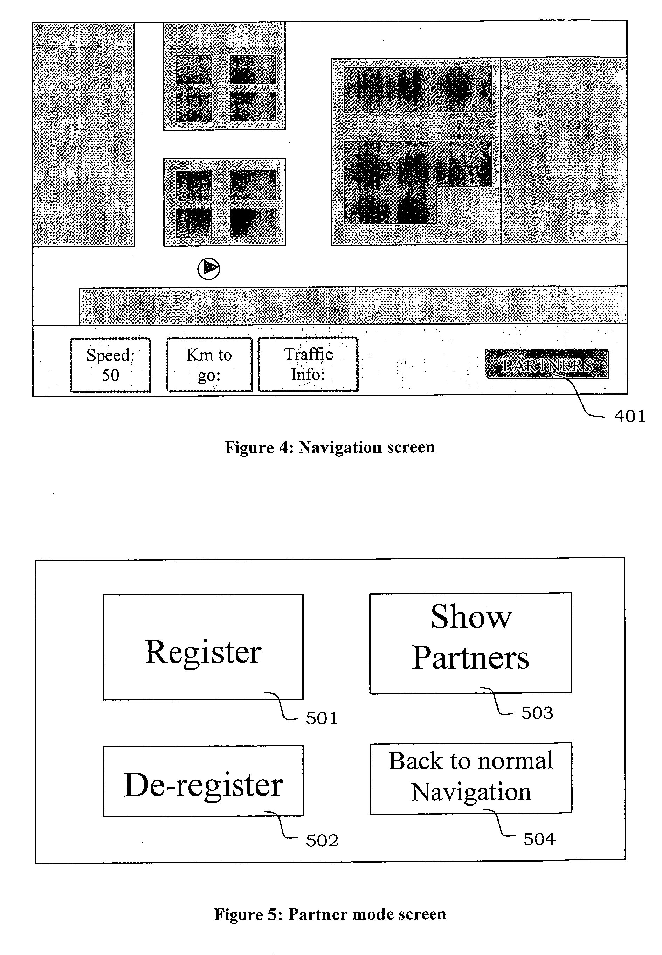

Today many vehicles are equipped with a navigation system. One conceivable screen that may be shown to the driver of a car is depicted in Fig. 4. Fig. 4 shows a small triangle, streets and buildings. The triangle is the symbol for the vehicle that the user is driving. According to the invention a button on the right bottom side may be provided. In the embodiment shown in Fig. 4 it carries the inscription "partners". By pressing this partners button 401, the user may reach a screen for community-based communication like it is shown in Fig. 5. This sequence of screens is also depicted in Fig. 2.

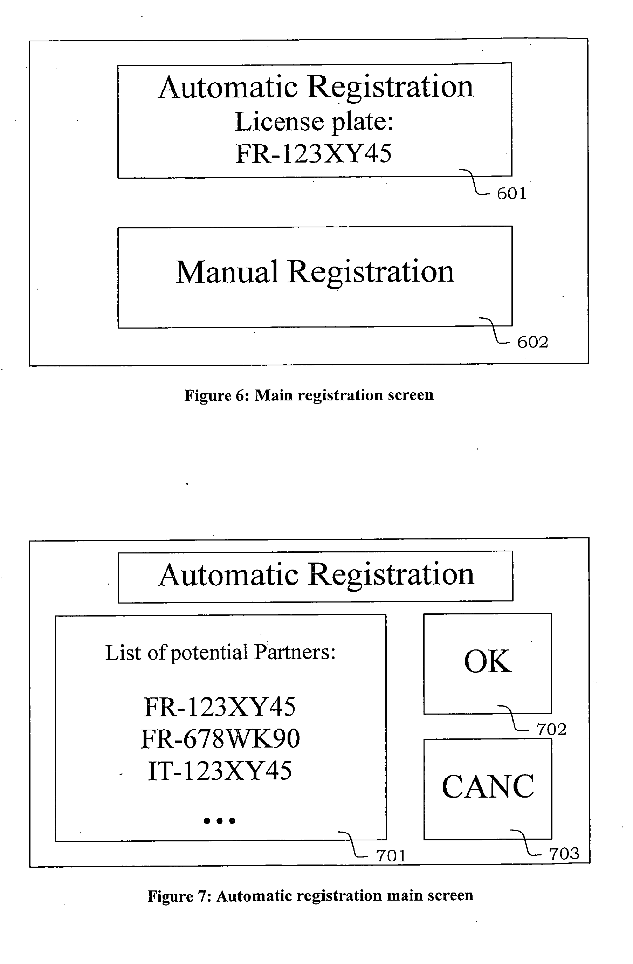

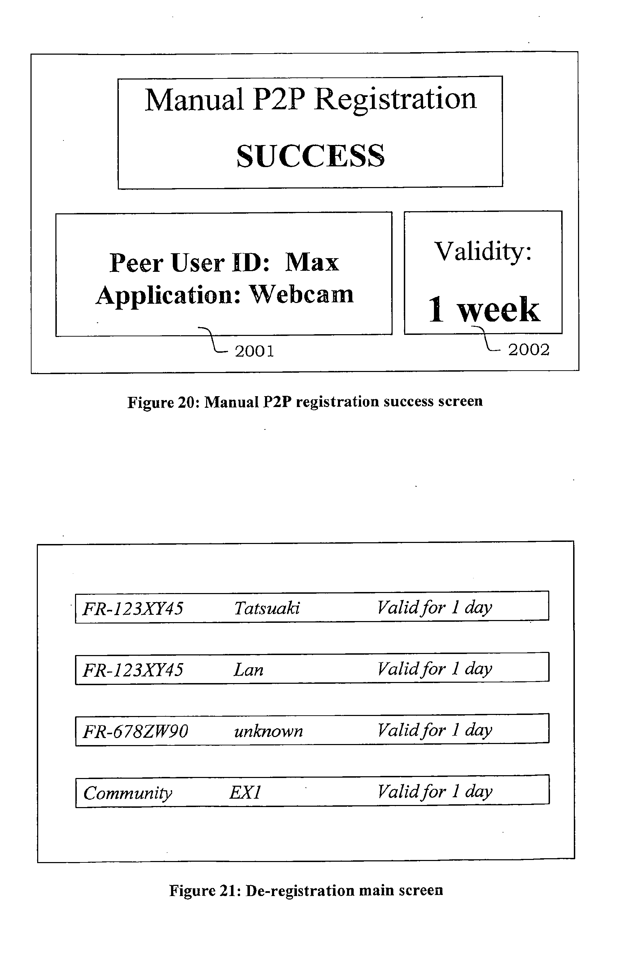

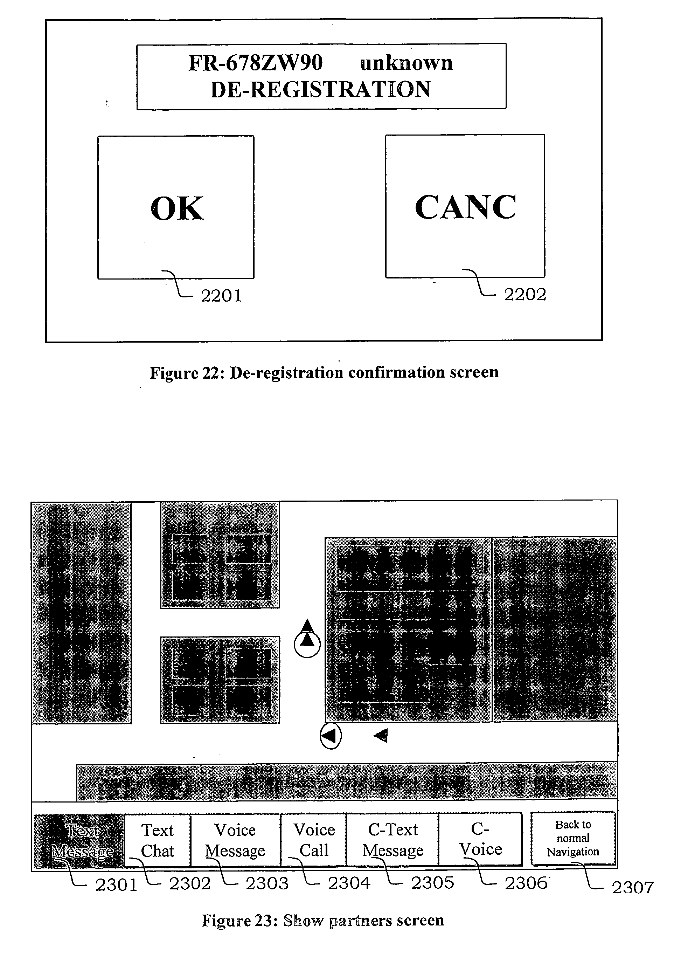

From the navigation screen 201 the user may reach the partner mode screen 202 by pressing the partners button 401. The partner mode screen 202, like depicted in Fig. 5, possesses four buttons. If the register button 501 is pressed, the main registration screen 203, like depicted in Fig. 6, is reached. If the deregister button 502 is pressed, the deregistration screen 204, like depicted in Fig. 21, is reached. If the show partners button 503 is pressed, the user is directed to the show partners screen 205, like it can be seen in Fig. 23. If the back to normal navigation button 504 is pressed, the navigation screen 201 shown in Fig. 4 appears again.

In the following, the registration procedure, the deregistration procedure, and the show partners mode will be explained in turn. The description will start with the registration procedure. When the register button 501 of the partner mode screen 202 is pressed, the main registration screen 203 like depicted in Fig. 6 will be shown. On this screen, there are two buttons: An automatic registration button 601 and a manual registration button 602. On the automatic registration button 601 the identifier of the car, the so called carID, is shown.

In the overall system, there are two types of unique identifiers: carIDs and so called UcarIDs. The carID attribute is assigned to a vehicle by default and it can be related to some unique characteristic of the vehicle itself, like the manufacturer, serial number or simply the license plate, including the country where the vehicle is registered. For example, actually a French vehicle could have a carID like FR-123XY45, while an Italian one may possess a carID like IT-WZT67AB. When required, these identifiers are automatically added to the IP-packets sent out by the vehicle.

The UcarID attribute is instead dependent on the person (user, driver or passenger) who wants to relate her- or himself to a vehicle for communication partnership purposes. In this case, a manual procedure is necessary for inputting the identity of the person; once this input is done, the rest of the registration procedure will be automatic. It is conceivable that the user identity is given, for example, by writing a name or by reading some biometric characteristic, like the finger print or vein system, read by some external sensor.

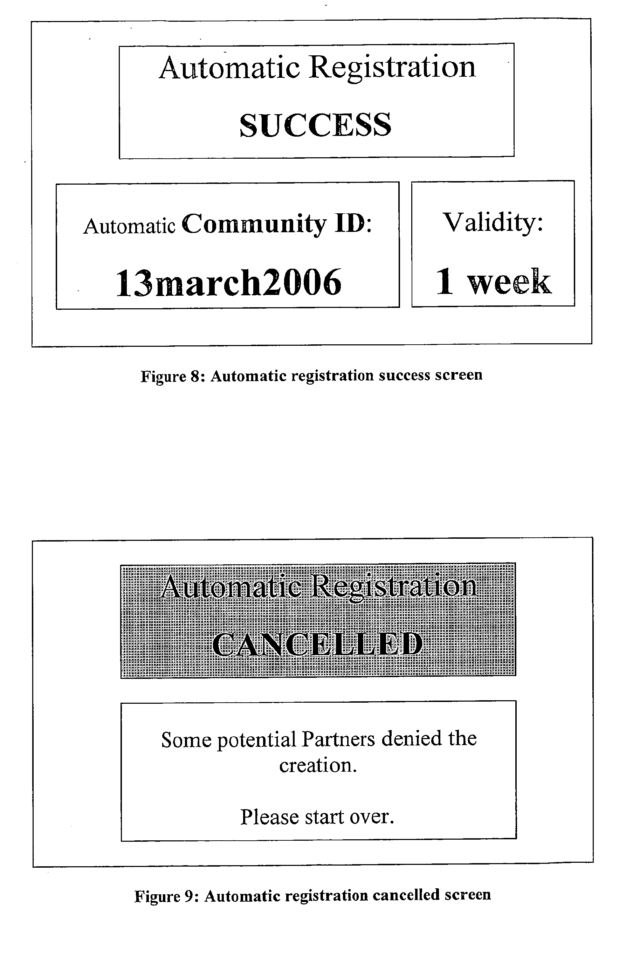

When automatic registration is chosen, users will see the automatic registration main screen 206 like depicted in Fig. 7. At the same time search packets are broadcast by each vehicle communication system. Users will see in the automatic registration main screen a growing list of potential community partners 701. These potential partners are identified with their carID. Only after at least two potential partners appear, the buttons OK and CANCEL will be enabled. The OK button 702 is to accept all the potential partners as community members. The CANCEL button 703 is to deny the creation of the community, because at least one of those potential partners is not welcome. If within a predetermined time frame (for example 15 seconds) all the potential partners accepted all the other potential partners, then the community is created and the automatic registration success screen 207 like depicted in Fig. 8 will be shown.

This screen shows an automatically created community ID (for example the date) and a time of validity of the community. The communication application for the community can not be chosen. Instead, there is a default application. This default application may be, for example, text messaging. The community ID is local and only for the convenience of the user. This means that a vehicle can register automatically more than once per day. In this case, an additional number may be annexed to the date in order to determine the community ID.

If on the contrary at least one potential partner does not accept one or more potential partners and presses the CANCEL button 703, the automatic registration cancelled screen 208 like depicted in Fig. 9 will be shown. The automatic registration cancelled screen will be shown only for a predetermined time frame (for example 15 seconds).

After the automatic registration success screen 207 or the automatic registration cancelled screen 208, the system shows once again the partner mode screen 202.

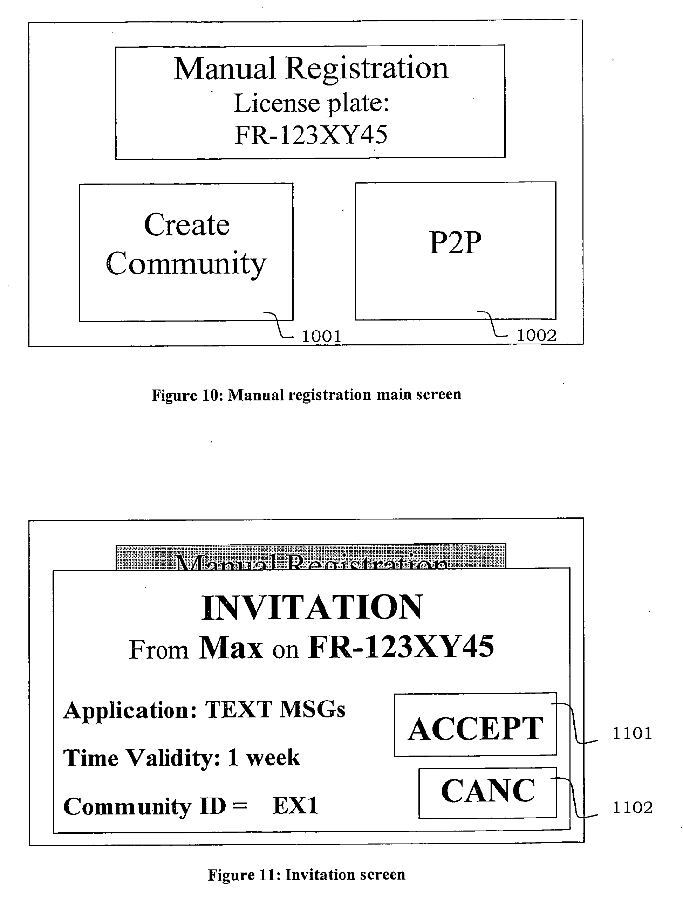

If the user wants to perform manual registration, he presses the manual registration button 602 that is shown on the main registration screen 203. After pressing this button the manual registration main screen 209 is shown. This screen can be seen in Fig. 10.

For the user there are now three possibilities:
1. The user may wait for manually created community invitations coming from other users.
2. The user may create manually a community by pressing the create community button 1001.
3. The user may establish only a set of P2P registrations by pressing the P2P button 1002.

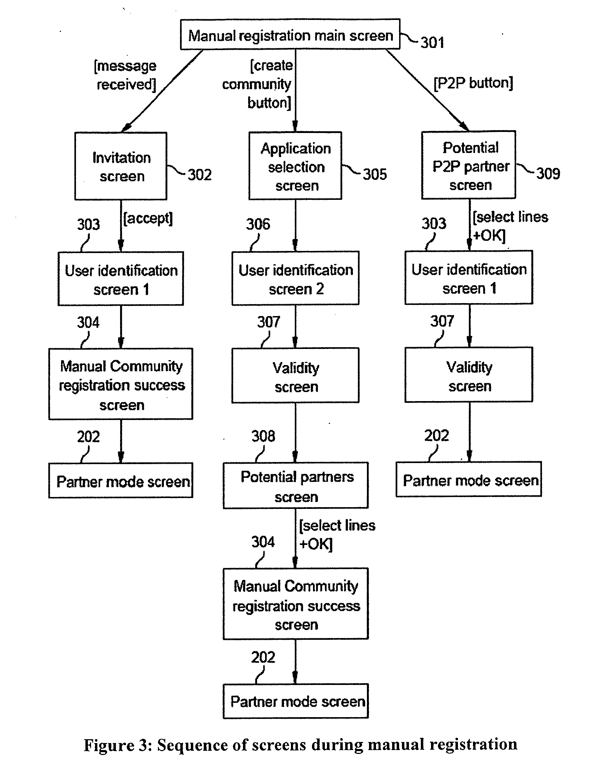

These three possibilities will be now discussed in turn. In case the user wants to accept an invitation from other mobile nodes to form a manually created community, he or she just has to wait for some incoming messages. If a message is received that contains an invitation, the invitation screen 302 (see Fig. 3) like illustrated in Fig. 11 will be shown. The invitation screen shows an invitation that comes from a certain user using a certain mobile node, for example a vehicle. In the shown example the user Max invites to participate in a community. He drives the car with the license plate FR-123XY45. Furthermore, the invitation screen shows the type of application that should be used within the community. Furthermore, it shows how long the community is valid and it shows the community ID.

The user has now the option to accept the invitation by pressing the accept button 1101 or to decline the invitation by pressing the CANCEL button 1102. If the user presses the CANCEL button 1102, the manual registration main screen 209, 301 will be shown again. If the user accepts, the user identification screen 1 303 will be shown.

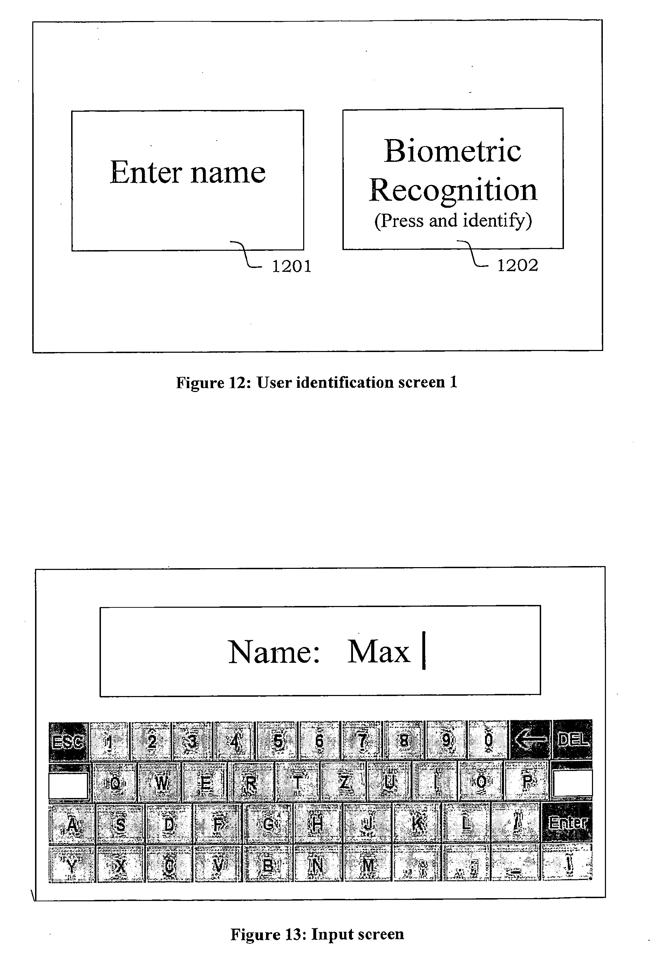

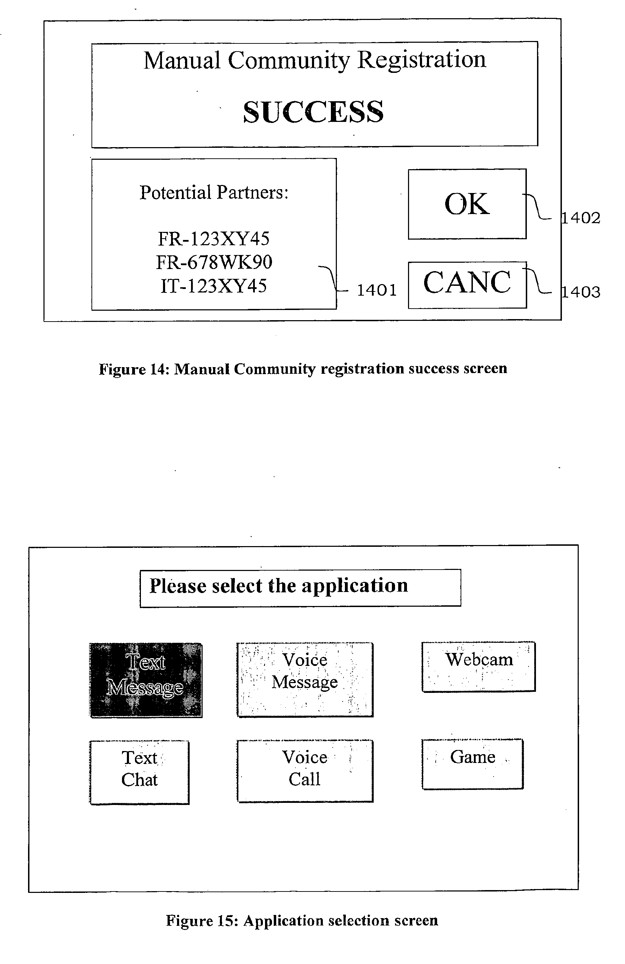

The user identification screen 1 is illustrated in Fig. 12. The user may either press the enter name button 1201 or the biometric recognition button 1202. If the user presses the enter name button 1201, an input screen appears like depicted in Fig. 13. This screen allows the user to input his name. After having finished the inputting of his name, the manual community registration success screen 304, like illustrated in Fig. 14, is shown. In a special field 1401, the manual community registration success screen shows the carIDs of the potential partners. If the user wants to participate in a community with these potential partners, he presses the OK button 1402. If he does not want to participate in this community, he may simply press the CANCEL button 1403.

The user may also decide to initiate the creation of a community by pressing the create community button 1001 on the manual registration main screen 209, 301. If he presses this button, the application selection screen 305 that is illustrated in Fig. 15 is shown. The application selection screen contains several buttons. Each of these buttons represents one possible application. By pressing the respective button, the user may choose to build a community that is able to execute this application. For example, the user may choose to send text messages within the community or he may choose to play a game with other members of the community.

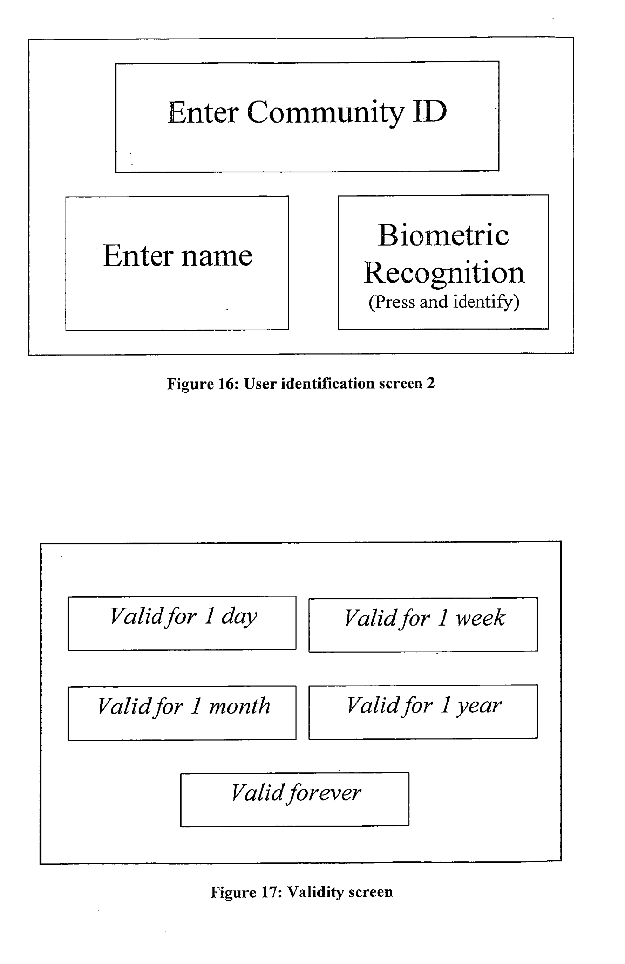

After having selected the application, the initiator must enter a community ID, his or her identifier, which may be a name or a biometric identifier, and a time of validity for the community. These things are input by using the user identification screen 2 306 like illustrated in Fig. 16 and an input screen like, for example, shown in Fig. 13. The time of validity is input by using the validity screen 307 that is shown in Fig. 17.

After these three inputs, the initiator vehicle communication system will broadcast personal invitation messages to all surrounding partners, with a description including the community ID, the application to be used and the time of validity. Within a predetermined time frame, for example 1 or 2 minutes, every invited partner can decide to accept the invitation or to decline it. Some partners will accept the invitation by giving the OK on the invitation screen 302 by pressing the ACCEPT button 1101, like it is shown in Fig. 11. The partners that accept will send back to the initiator their UcarID.

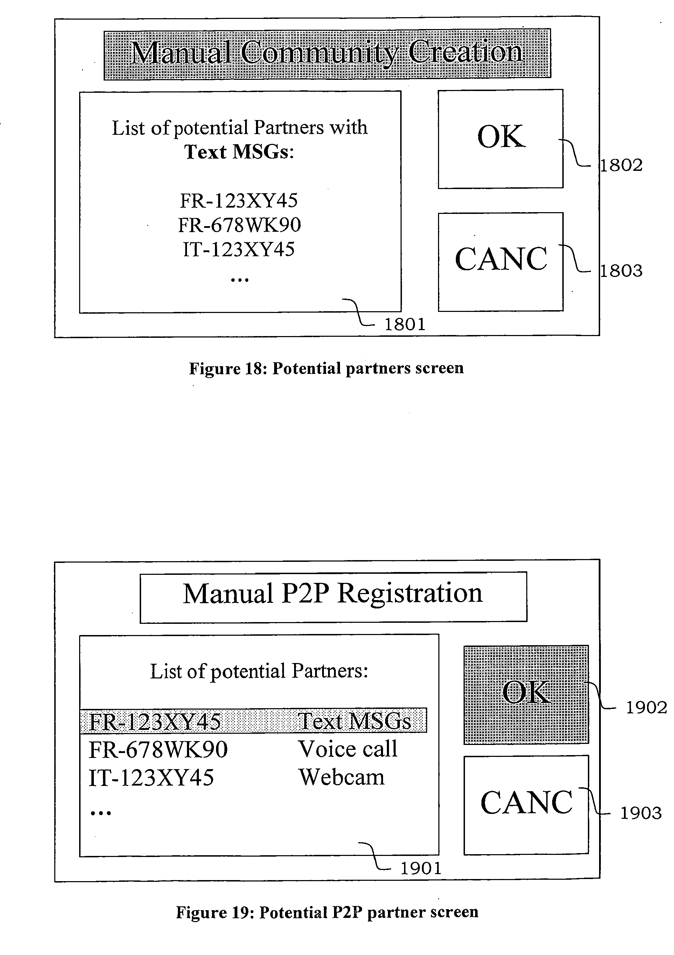

The initiator will see in front of him the potential partner screen 308 that is shown in Fig. 18. On this potential partners screen, a growing list of potential partners 1801 that are able to execute the selected application is shown. The initiator may then select by touching the respective line the partners with which he wants to build a community. After having selected suitable partners, the user presses the OK button 1802. If the user does not want to build a community any more, he may press the CANCEL button 1803.

When the initiator touches the OK button 1802, some unicast registration messages are sent to the selected partners, who will be able to finally accept the rest of the partners or not by using the manual community registration success screen 304 that is shown in Fig. 14. If some of the invited partners accept, the registration process will terminate successfully and on each partner vehicle the information of the others partners is stored in a database.

When the user faces the manual registration main screen 209, 301 he may also choose to press the P2P button 1002. In this case, some messages are broadcast by his vehicle communication system in order to find partners available for P2P registrations. If P2P registration partners are found, some unicast messages are exchanged containing the carIDs and the set of onboard available communication applications. The user will then see the potential P2P partner screen 309 that is shown in Fig. 19.

The potential peer-to-peer partner screen contains a list of potential partners 1901. In this list, each potential partner is described with his carID and the application he is able to execute. The user can select any number of potential partners by touching the respective carID. After having selected the suitable partners, the user may press the OK button 1902. If the user does not want to establish any peer-to-peer registration with the listed partners, the user may press the CANCEL button 1903.

After having pressed the OK button, the user identification screen 1 303 that is illustrated in Fig. 12 is shown. With the help of this screen, the user may enter his name or he may choose biometric recognition. After having identified himself, the validity screen 307 appears. With the help of this screen, the user gives the peer-to-peer registration a time of validity. After these two inputs, the user's vehicle communication system will send unicast confirmations to the selected P2P partners, who will see the manual P2P registration success screen, like it is shown in Fig. 20. This screen informs the selected peer-to-peer partners of their successful registration. The manual P2P registration success screen contains a field, where the peer UcarID is displayed and where is shown, which application was chosen. Furthermore, the screen contains a field that states the time of validity of the peer-to-peer registration. On the screen of the initiator of the peer-to-peer registration, the partner mode screen 202 appears again.

When the user sees the partner mode screen 202 that is shown in Fig. 5, he may also choose to press the deregister button 502. In this case, the deregistration main screen 204 that is shown in Fig. 21 appears. On this screen, peer-to-peer registrations and community registrations are shown. Peer-to-peer registrations always contain a carID. Additionally, the registration may also contain a UcarID, i. e. for example the name of the user. Communities are displayed by starting with the word "community". Afterwards an identifier of the community is displayed. All registrations are shown with their time of validity. The user can select a partner to deregister by touching the respective line.

After this selection, the deregistration confirmation screen 210 will appear that is shown in Fig. 22. The deregistration confirmation screen shows the information of the selected partner for deregistration. The user can confirm the deregistration by pressing the OK button 2201. If the user does not want to delete the shown partner, he may press the CANCEL button 2202.
When a user manually deregistered a partner from his list of registered community members and this cancelled partner comes back in the communication range with existing registration entries, the communication requests by the cancelled partner will be answered by a "rejection" message which will instruct the cancelled partner to delete the communication partner from his list of registered community members.

The above described method for manually deregistering partners only needs to be executed, if the time of validity of a partner is set to forever or if the user wants to force pre-expiration of an entry in the list of registered community members. In the case, where the validity of a partner in the list has expired, the partner is automatically deleted by the garbage collection method that is described later.

After the deregistration the partner mode screen 202 is displayed again.

When the user sees the partner mode screen 202 in front of him, he may also choose to press the show partners button 503. In this case, the show partners screen 205 appears that is displayed in Fig. 23. The show partners screen is similar to the navigation screen that is shown in Fig. 4. In addition to the navigation screen, the show partners screen shows reachable community members on the screen as a triangle. Also the movements of the registered partners are displayed. This can be done, because each vehicle periodically broadcasts some beacon messages containing its position and movement information anyway, since this information is necessary for safety applications. The invention reuses this information and filters it. When some partners are in the communication range, but are located outside of the actual scaled navigation map, the system will list them aside of the map.

Any vehicle receiving these messages will determine, if the senders are registered as partners or not. If the receiving vehicles do not recognize senders as partners, the vehicle communication system is anyway able to forward those broadcast messages. This may be necessary to run other applications than the comfort/entertainment applications that the invention relates to, for example the rebroadcasting must be performed to be able to run safety applications like collision avoidance.

Besides the triangles representing registered community members that can be currently reached, the show partners screen contains buttons 2301 - 2306 that represent an application each. Moreover, on the right hand side there is a back to normal navigation button 2307. If this button is pressed by the user, the system goes back to the navigation screen 201 that is shown in Fig. 4.

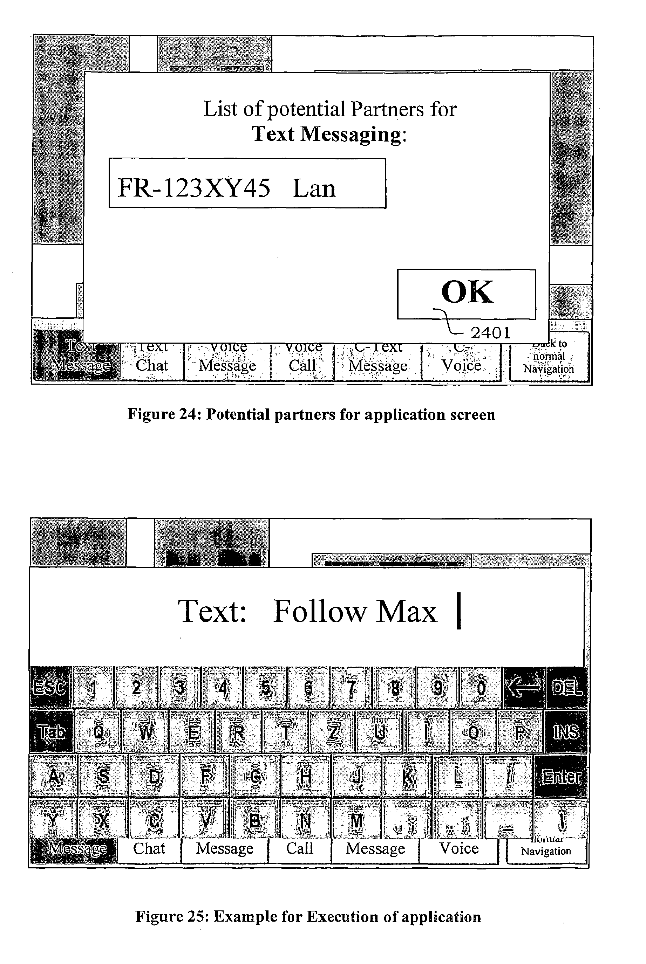

If one of the buttons 2301 - 2306 that represent an application is pressed, the potential partners for application screen 211 appears which is depicted in Fig. 24. The screen shows a list of UcarIDs and carIDs that belong to community members that are reachable and that are able to execute the selected application. The user may select one community member from the list of potential partners and may than press the OK button 2401. In the example shown in Fig. 24, the application was text messaging. Therefore, in a next step an input screen, like shown in Fig. 25, appears. In this screen the user can enter a text message that is then sent to the community member. Inputting the text message is one embodiment of the general step execution of application 212. After the application has been executed, the partner mode screen 202 is shown again.

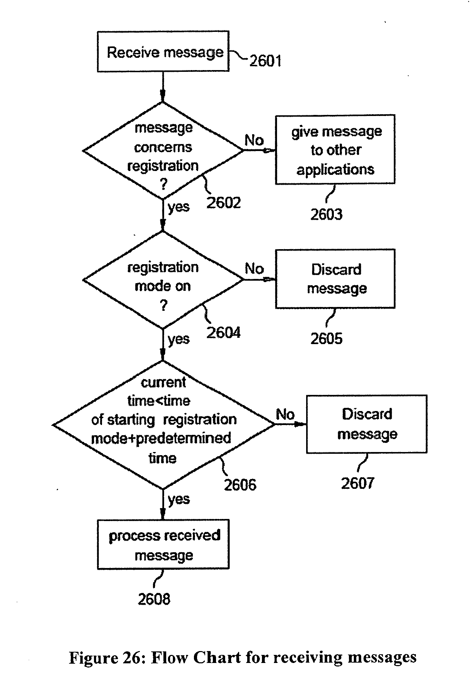

Fig. 26 shows the flow of instructions for receiving messages. In step 2601 a message is received. In step 2602 it is checked, whether the message concerns registration. If this is not the case, the message is given to other applications in step 2603. If the message, however, concerns registration, it is checked in step 2604, whether the registration mode is turned on. If the registration mode is not turned on, the message is discarded in step 2605. If the registration mode is turned on, it is checked in step 2606, whether the current time is smaller than the time when the registration mode was started plus a predetermined time period. If the current time is not smaller, the message is discarded in step 2607. If the current time is smaller than the time when the registration mode was started plus the predetermined time period, then the received message is further processed in step 2608.

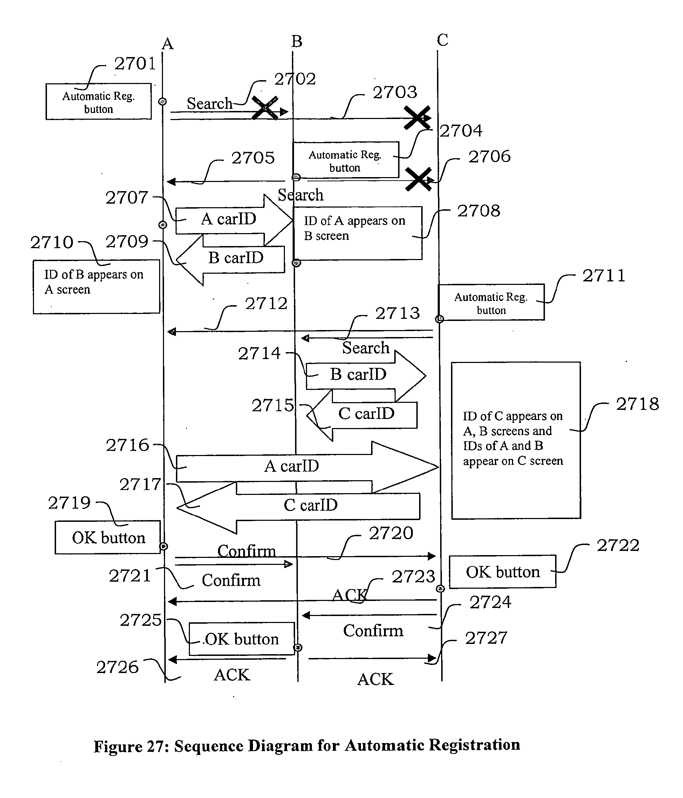

Fig. 27 shows a sequence diagram that describes one embodiment of the protocol that may be executed when automatic registration takes place. There are three mobile nodes: A, B and C. In step 2701 A pushes the automatic registration button 601 on the main registration screen, like shown in Fig. 6. Due to this action the apparatus that A uses sends search messages to B and C in step 2702 and 2703. Due to the method that is described in Fig. 26 these search messages are discarded, because B and C haven't pressed the automatic registration button 601, which means that the registration mode is not turned on on node B and on node C. Later, node B presses the automatic registration button 601 in step 2704. Also the mobile node B sends now search messages to the mobile node A and to the mobile node C (step 2705 and 2706). Because node A already had pressed the automatic registration button 601 and the predetermined time period has not expired yet, the message is received by node A. Node C discards the search message, because the automatic registration button 601 was not pressed by the user of the mobile node C. Mobile node A now sends its carID to node B in step 2707. In step 2708 the ID of A appears on the screen of node B. Then node B sends its carID to node A in step 2709. The carID of node B appears on the screen of node A (step 2710). Now also node C presses the automatic registration button in step 2711 and sends search messages to A and B (step 2712 and 2713). Node A and node B receive the search message from node C, because the predetermined time frame has not elapsed, yet. Since node B received a search message from node C, B sends its carID to node C in step 2714 and node C sends its carID to node B in step 2715. Also node A sends its carID to node C (step 2716) and node C sends its carID to node A (step 2717). Afterwards, in step 2718 the ID of node B appears on the screen of node C and the ID of node C appears on the screen of node B. Also the ID of node C appears on the screen of node A and the ID of node A appears on the screen of node C. In step 2719 node A presses the OK button. Due to this, a confirm message is sent to node B and to node C (step 2720 and 2721). In step 2722 also node C presses the OK button. Node C sends an acknowledgement to node A and a confirmation message to node B (step 2723 and 2724). Then the user of node B presses the OK button in step 2725. B sends an acknowledgement message to node A and a further acknowledgement message to node C (step 2726 and 2727). Now, the three nodes have established a community.

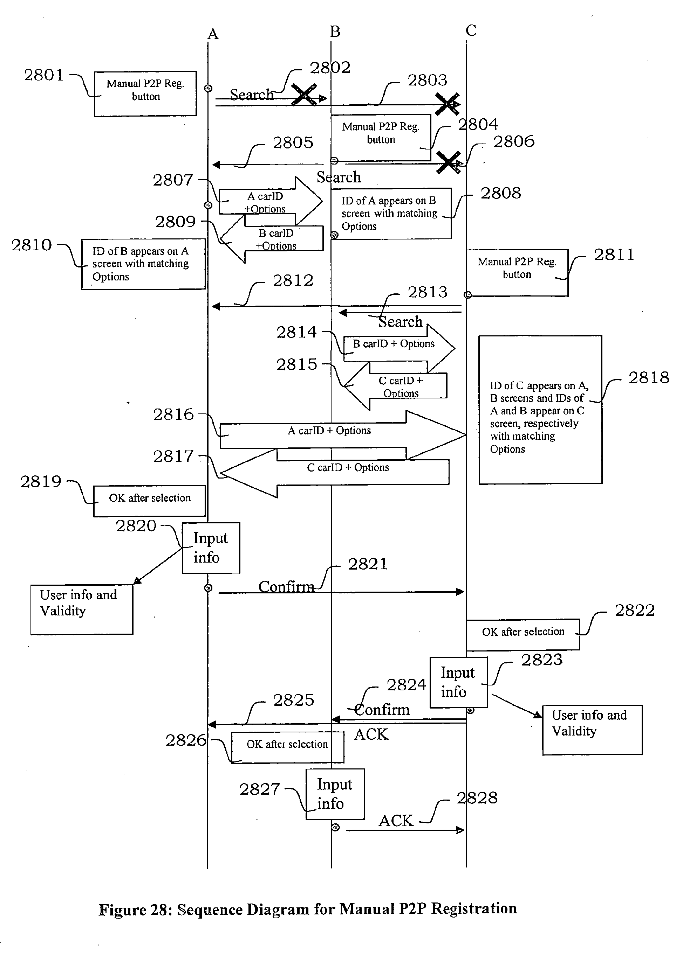

Fig. 28 shows one embodiment of a protocol for manual P2P registration as a sequence diagram. Again, there are three mobile nodes A, B and C. In step 2801 the user of node A presses the manual P2P registration button 1002 on the manual registration main screen 209, 301. Due to this action, two search messages are sent in step 2802, 2803 to node B and node C. Both search messages are discarded, because the registration mode has not been turned on yet on node B and on node C. In step 2804 the user of node B pushes the manual P2P registration button 1002. Due to this action search messages are sent to node A and to node C (step 2805, 2806). In step 2807 A sends its carID plus options to node B. Node B displays the ID of node A on the screen of node B and also shows options for executable applications in step 2808. In step 2809 node B sends its carID plus application options to node A. The ID of node B appears on screen A together with application options in step 2810. In step 2811 the user of node B presses the manual P2P registration button 1002. Due to this action, two search messages are sent to node A and node B (step 2812, 2813). In step 2814 node B sends its carID plus application options to node C. In step 2815 node C sends its carID plus application options to node B. In step 2816 node A sends its carID plus application options to node C and in step 2817 node C sends its carID plus application options to node A. As a result, the ID of C appears on the screens of node A and B and the IDs of A and B appear on the screen of node C in step 2818. The application options are displayed respectively. In step 2819 the user of node A presses the OK button after he has selected suitable community members. In step 2820 the user of node A inputs his user info and inserts a time of validity. In step 2821 node A sends a confirmation message to node C. The user of node C selects suitable community members and presses the OK button in step 2822. After that, the user of node C inputs his user information and a time of validity in step 2823. After that, node C sends a confirmation message to node B in step 2824. In step 2825 node C sends an acknowledgement to node A. Also node B selects suitable community members and presses the OK button in step 2826. Afterwards, the user of node B inputs his user information and inputs a time of validity. In step 2828 node B sends an acknowledgement to node C. In this way, peer-to-peer registrations are done between the nodes A and C, and between the nodes B and C.

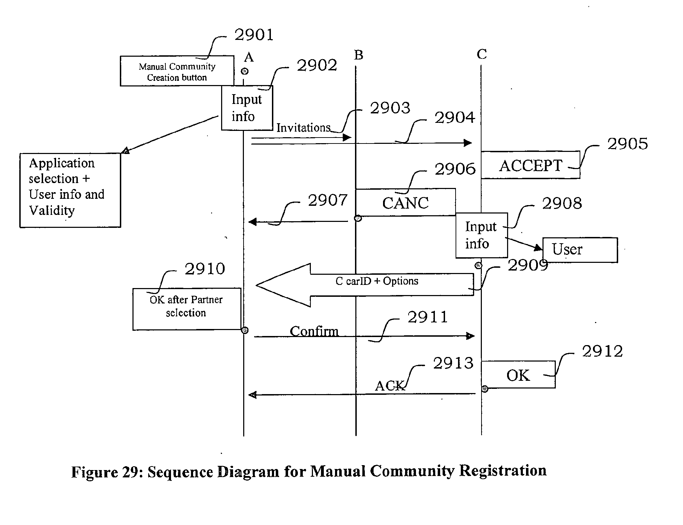

In Fig. 29 one embodiment of a protocol for a manual community registration is illustrated as a sequence diagram. In step 2901 the user of node A presses the manual community creation button 1001. Afterwards, the user inputs in step 2902 which application he would like to execute, his user information and a time of validity. In step 2903 an invitation is sent to node B and in step 2904 an invitation is sent to node C. The user of node C accepts the invitation in step 2905. The user of node B declines the invitation in step 2906 by pressing the CANCEL button 1102. In step 2907 a message is sent from node B to node A, notifying node A that node B cancelled the invitation. In step 2908 the user of node C inputs his user information. In step 2909 the carID of node C plus application options are sent from node C to node A. In step 2910 node A selects a suitable partner and presses the OK button. After that, in step 2911 a confirmation message is sent from node A to node C. The user of node C sees who will be a member of the community and presses the OK button in step 2912. In step 2913 an acknowledgement message is sent from node C to node A.

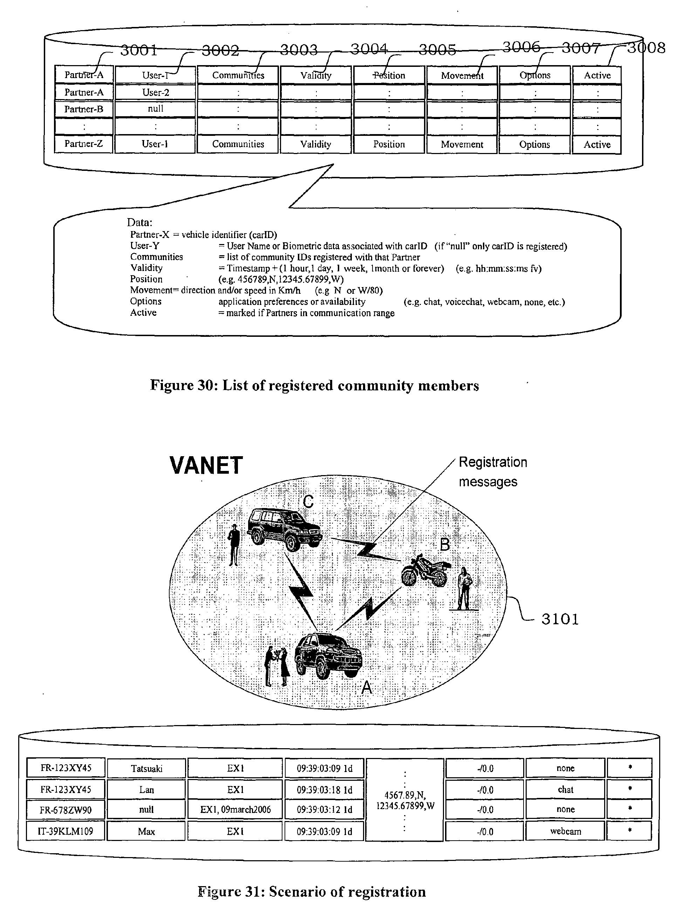

Fig. 30 shows one embodiment of a list of registered community members. The embodiment of the list of registered community members possesses 8 columns. In the partner column 3001 the carID of the respective community member is stored. In the user column 3002 the user name or biometric data associated with the user is stored. The entry in the user column 3002 may also be null. This means that no user is registered, only the carID is given. In the communities column 3003 all community IDs of the communities, in which the respective partner is registered, are stored. The validity column 3004 contains a time stamp, stating when the entry was created, plus the time of validity of the entry. The time of validity may be one hour, one day, one week, one month or forever. However, obviously the invention is not restricted to these times of validities. In the position column 3005 the position of the community member is stored. For expressing the position any viable coordinate system may be used. The movement column 3006 contains the direction and/or speed in km/h of the registered community member. The options column 3007 contains application preferences or availability information. For example, in this column it may be stored, whether the community member is able to execute the applications chat, voice chat, webcam or any other type of application. The active column 3008 contains a flag that indicates whether the partner is in communication range or not.

Fig. 31 shows one scenario for a list of registered community members. Car A possesses two passengers: Tatsuaki and Lan. The carID is FR-123XY45. Tatsuaki and Lan belong to the community EX1. The community was created at 09:39:03:09 and the time of validity is one day. In the next column the position is given. Car A does not move at the moment. Tatsuaki is not able to execute any applications and Lan can execute chat. Both, Tatsuaki and Lan are in communication range. Also vehicle B, a motorbike, is registered. It possesses the carID FR-678ZW90. A user is not registered. This vehicle belongs to the communities EX1 and 09march2006. The validity of this entry is 09:39:03:12 plus one day. Also the motorbike is standing still and it is not able to execute any applications. The motorbike is reachable. Also car C is registered. It possesses the carID IT-39KLM109. The user is called Max. The entry belongs to the community EX1. The entry was created at 09:39:03:09 and is valid for one day. Car C is like vehicle A and B at the position 4567.89, N, 12345.67899, W, does not move and it is able to support the webcam application. All four users are currently in communication range.

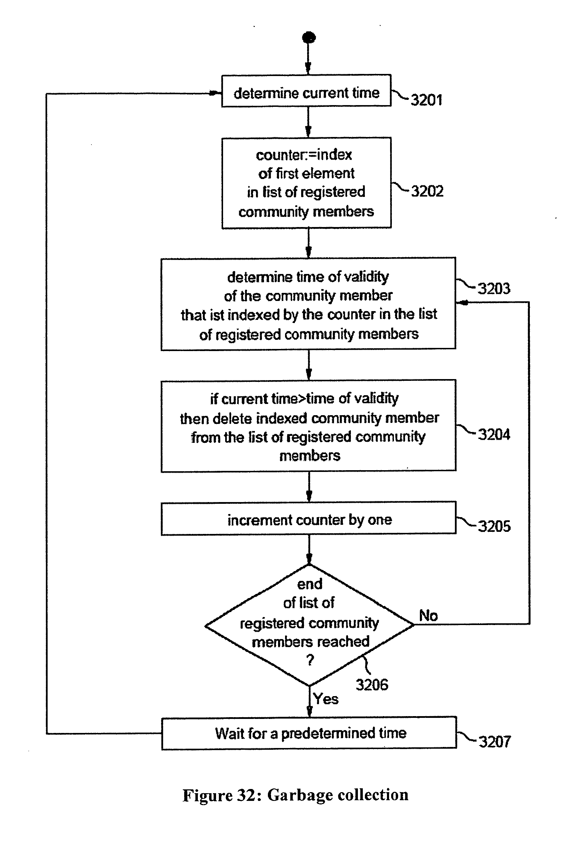

Fig. 32 shows how expired entries are automatically deleted from the list of registered community members. In step 3201 the current time is determined. In step 3202 a counter is initialized with the index of the first element in the list of registered community members. In step 3203 the time of validity of the community member that is indexed by the counter in a list of registered community members is determined. In step 3204 the decision is taken if the current time is larger than the time of the validity of the respective community member entry in the list. If the current time is larger than this validity, the indexed community member entry is deleted from the list of registered community members in step 3204. Afterwards, the counter is incremented by 1 in step 3205. If there is still an entry at the position that is indexed by the updated counter (step 3206), a new iteration starts at step 3203. If the counter points to an empty row, which means that the end of the list of registered community members is reached, the loop ends (step 3206). In step 3207 the garbage collection procedure waits for a predetermined time. Obviously, this should be no busy waiting. Instead, the garbage collection procedure should be implemented as a lightweight process, e.g. a thread. Preferably, the predetermined time is one hour. After the predetermined time the garbage collection procedure resumes at step 3201 again.

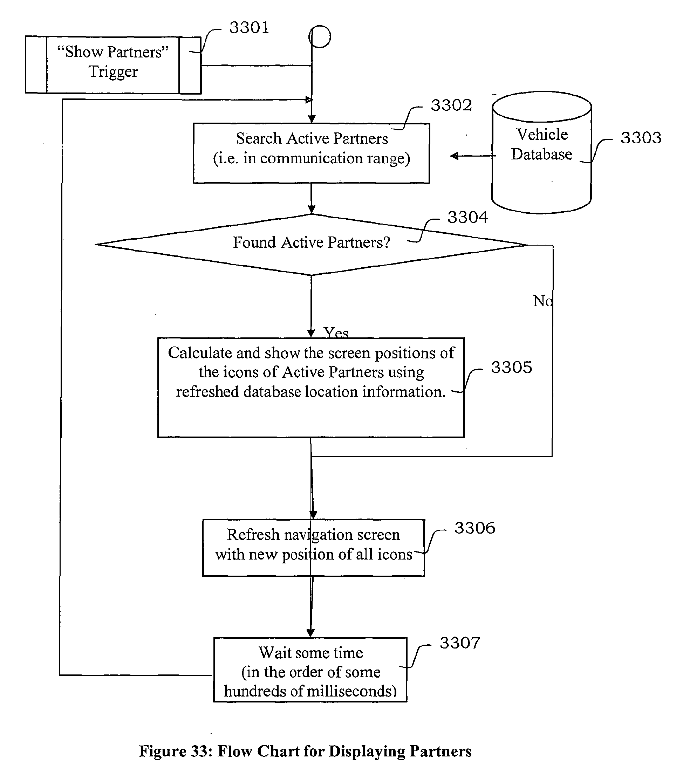

Fig. 33 shows a flow chart for the show partners mode. This mode is entered when the show partners button 503 is pressed on the partner mode screen 202 in step 3301. First, community members are searched that are in the communication range in step 3302. For this purpose, the list of registered community members is used in step 3303. If community members are found in the communication range in step 3304, their respective position is calculated and is shown on the navigation screen in step 3305. This is done by receiving the position of the recognized community member, calculating the position on the display that corresponds to the position of the recognized community member, and displaying a symbol representing the recognized community member at the calculated position. In step 3306 the navigation screen is refreshed. This means that all the new positions of all symbols are displayed. In step 3307 the overall system waits for some time. This time may lie in the order of some hundreds of milliseconds. After the waiting period, the procedure jumps back to step 3302. If in step 3304 no active partners are found, the step 3305 is omitted.

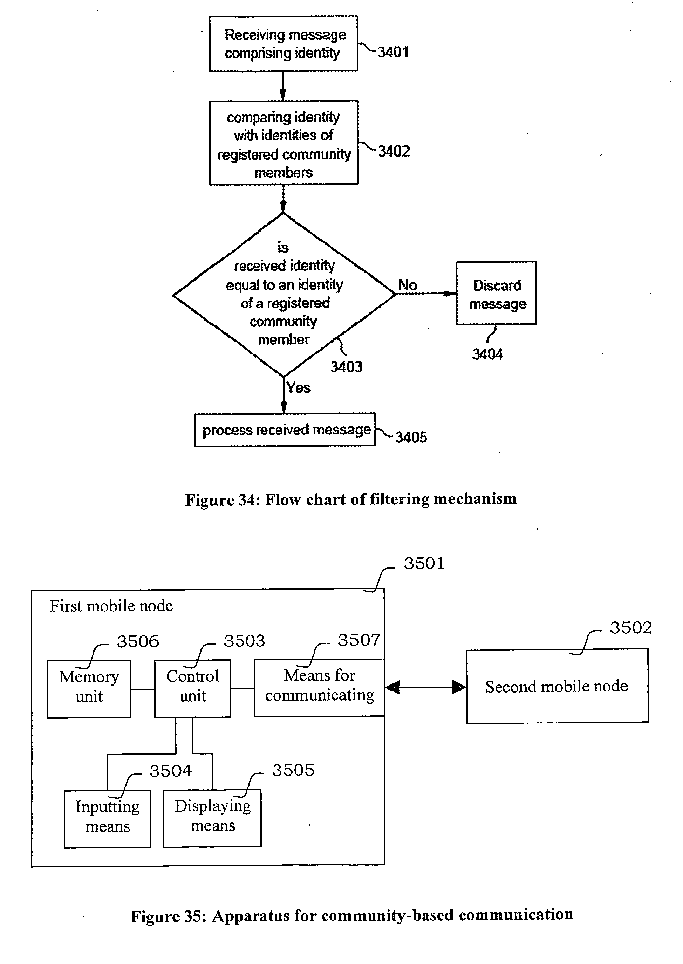

In Fig. 34 it is depicted how the filtering mechanism works. In step 3401 a message is received that comprises the identity of the sender. This received identity is compared with the identities of registered community members in step 3402. In step 3403 it is determined whether the received identity is equal to the identity of a registered community member. If the received identity is not equal to an identity that is listed in the list of registered community members, the message is discarded in step 3404. If the received identity is equal to an identity of a registered community member, the message is further processed in step 3405.

Fig. 35 shows one embodiment of an apparatus for community-based communication. The apparatus comprises a control unit 3503, an inputting means 3504, a displaying means 3505, a memory unit 3506, and means for communicating 3507 between a first mobile node 3501 and at least a second mobile node 3502.

Summarizing the above, the apparatus and method for community-based communication allow to easily build a community, to recognize community members in communication range, to display recognized community members on an on-board screen, and to interact with the community members.

The specifications and drawings are to be regarded in an illustrative rather than a restrictive sense. It is evident that various modifications and changes may be made thereto without departing from the spirit and scope of the invention as set forth in the claims.

While the invention has been described with reference to different embodiments above, this description shall not limit the disclosure or features and aspects of the present invention. In this regard, as far as modifications are readily apparent for an expert skilled in the art they shall be included by the above description of embodiments implicitly. For example, while the content of the exchanged messages has been described, it may also be possible to use the method according to the invention by exchanging messages with different contents. Furthermore, the order of the exchanged messages and the structure of the list of registered community members may be different.

## Claims

1. Apparatus for community-based communication between at least two mobile nodes (3501, 3502, A, B, C) comprising
- a control unit (3503) comprising a data processing means,
- an inputting means (3504),
- a displaying means (3505),
- a memory unit (3506),
- means for communicating (3507) between a first mobile node (3501) and at least a second mobile node (3502),
wherein
- the control unit (3503) allows to register at least one community member,
- the memory unit (3506) comprises a list of registered community members,
- the control unit (3503) recognizes reachable community members using the means for communicating,
- the displaying means (3505) displays symbols representing recognized community members,
- the inputting means (3504) allows to interact with the displayed symbols, and
- the control unit (3503) performs actions based on the interaction with the displayed symbols.

2. Apparatus according to claim 1, wherein the control unit (3503) recognizes reachable community members using a filtering mechanism comprising the steps of
- receiving at least one message from at least a second mobile node comprising an identification of the mobile node,
- comparing the identification with the identifications of the community members that are registered in the list of registered community members,
- determining whether the received message was sent by a registered community member based on the comparison, and/or
- further processing the received message if it was sent by a registered community member.

3. Apparatus according to at least one of the preceding claims, wherein the control unit (3503) further allows to deregister community members.

4. Apparatus according to at least one of the preceding claims, wherein the inputting means (3504) further allows to input an identification of a user of the apparatus, a time of validity of the identification of the user, and/or a time of validity of an identification of at least one mobile node.

5. Apparatus according to at least one of the preceding claims, wherein the memory unit (3506) stores an identification of the first mobile node, an identification of the user, a time of validity of the identification of the user, and/or a time of validity of the identification of the first mobile node.

6. Apparatus according to at least one of the preceding claims, wherein the means for communicating (3507) broadcasts an identification of the first mobile node, an identification of the user, a time of validity of the identification of the user, a time of validity of the identification of the first mobile node and/or options.

7. Apparatus according to at least one of the preceding claims, wherein the means for communicating (3507) receives an identification of the second mobile node, an identification of the user of the second apparatus, a time of validity of the identification of the user using the second apparatus, a time of validity of the identification of the second mobile node and/or options.

8. Apparatus according to at least one of the preceding claims, wherein the control unit (3503) establishes a communication with the community member that is represented by the symbol with which the user interacted using the inputting means (3504).

9. Method for community-based communication between a first mobile node (3501) and at least one second mobile node (3502) comprising the steps of
- registering at least one community member,
- storing a list of registered community members,
- recognizing reachable community members,
- displaying symbols representing recognized community members,
- interacting with the displayed symbols, and
- performing actions based on the interaction with the displayed symbols.

10. Method for community-based communication according to claim 9, wherein the step of recognizing reachable community members uses a filtering mechanism comprising the steps of
- receiving at least one message from at least one second mobile node comprising an identification of the mobile node,
- comparing the identification with the identifications of the community members that are registered in the list of registered community members,
- determining whether the received message was sent by a registered community member based on the comparison, and/or
- further processing the received message if it was sent by a registered community member.

11. Method for community-based communication according to at least one of the claims 9 to 10, wherein the step of registering at least one community member comprises in the automatic registration mode the steps of
- searching reachable mobile nodes,
- receiving at least one message from at least one found mobile node,
- exchanging at least one identification and/or at least one option with the at least one found mobile node,
- displaying the at least one identification and/or the at least one option to the user, and/or
- accepting to register the at least one found mobile node as a community member by the user.

12. Method for community-based communication according to claim 11, wherein the control unit (3503) discards received messages that are received before the starting of searching reachable mobile nodes and/or that are received later than a predetermined period of time after the starting of searching reachable mobile nodes.

13. Method for community-based communication according to at least one of the claims 11 to 12, wherein the step of accepting to register the at least one found mobile node as a community member by the user in the manual registration mode further comprises the steps of selecting one of the at least one found mobile node and/or sending a user identification and a time of validity of the user identification.

14. Method for community-based communication according to at least one of the claims 9 to 10, wherein the step of registering at least one community member comprises the steps of
- receiving an invitation to be a member of a community comprising at least one identification and/or a time of validity of the identification and/or at least one option of the inviting node,
- displaying the at least one identification and/or the time of validity of the identification and/or the at least one option to the user,
- accepting to register the inviting node as a community member by the user, and/or
- sending at least one identification and/or the time of validity of the identification and/or at least one option to the inviting node.

15. Method for community-based communication according to at least one of the claims 9 to 14, wherein the control unit (3503) deletes community members from the list of registered community members when the time of validity of the identification of the community members has expired.

16. Method for community-based communication according to at least one of the claims 9 to 15, wherein the user is enabled to delete community members from the list of registered community members using the inputting means (3504) employing the steps of
- displaying the community members that are registered in the list,
- selecting at least one community member from the list by the user, and/or
- triggering a deletion of the at least one selected community member from the list of registered community members.

17. Method for community-based communication according to at least one of the claims 9 to 16, wherein the step of displaying symbols representing recognized community members comprises the steps of
- receiving a position of at least one recognized community member,
- calculating a position on the display that corresponds to the position of the at least one recognized community member, and/or
- displaying at least one symbol representing the at least one recognized community member at the calculated position.

18. Vehicle including an apparatus according to at least one of the claims 1 to 8.

19. Computer software product for community-based communication between a first mobile node and at least one second mobile node, the computer software product being adapted, when loaded into a memory and processed by a data processing means to perform a method according to at least one of the claims 9 to 17.

20. Use of the computer software product according to claim 19 on a mobile node being a mobile electronic device, a mobile computer, a personal digital assistant, a laptop, a notebook, a smartphone, and/or a mobile phone.

21. Apparatus for community-based communication between at least two mobile nodes comprising
- a control unit (3503) comprising a data processing means,
- an inputting means (3504),
- a displaying means (3505),
- a memory unit (3506),
- means for communicating (3507) between a first mobile node and at least a second mobile node,
wherein
- the control unit (3503) allows to register at least one community member,
- the memory unit (3506) comprises a list of registered community members,
- the control unit (3503) recognizes reachable community members using the means for communicating and using a filtering mechanism comprising the steps of receiving at least one message from at least a second mobile node comprising an identification of the mobile node, comparing the identification with the identifications of the community members that are registered in the list of registered community members, determining whether the received message was sent by a registered community member based on the comparison, and/or further processing the received message if it was sent by a registered community member,
- the displaying means (3505) displays symbols representing recognized community members,
- the inputting means (3504) allows to interact with the displayed symbols, and
- the control unit (3503) performs actions based on the interaction with the displayed symbols.

22. Apparatus for community-based communication between at least two mobile nodes comprising
- a control unit (3503) comprising a data processing means,
- an inputting means (3504),
- a displaying means (3505),
- a memory unit (3506),
- means for communicating (3507) between a first mobile node and at least a second mobile node,
wherein
- the control unit (3503) allows to register at least one community member,
- the memory unit (3506) comprises a list of registered community members,
- the control unit (3503) recognizes reachable community members using the means for communicating,
- the displaying means (3505) displays symbols representing recognized community members,
- the inputting means (3504) allows to interact with the displayed symbols,
- the control unit (3503) performs actions based on the interaction with the displayed symbols, and
- the control unit (3503) establishes a communication with the community member that is represented by the symbol with which the user interacted using the inputting means.

23. Method for community-based communication between a first mobile node and at least one second mobile node comprising the steps of
- registering at least one community member,
- storing a list of registered community members,
- recognizing reachable community members using a filtering mechanism comprising the steps of receiving at least one message from at least one second mobile node comprising an identification of the mobile node, comparing the identification with the identifications of the community members that are registered in the list of registered community members, determining whether the received message was sent by a registered community member based on the comparison, and/or further processing the received message if it was sent by a registered community member,
- displaying symbols representing recognized community members,
- interacting with the displayed symbols, and
- performing actions based on the interaction with the displayed symbols.

24. Method for community-based communication between a first mobile node and at least one second mobile node comprising the steps of
- registering at least one community member, that comprises in the automatic registration mode the steps of searching reachable mobile nodes, receiving at least one message from at least one found mobile node, exchanging at least one identification and/or at least one option with the at least one found mobile node, displaying the at least one identification and/or the at least one option to the user, and/or accepting to register the at least one found mobile node as a community member by the user,
- storing a list of registered community members,
- recognizing reachable community members,
- displaying symbols representing recognized community members,
- interacting with the displayed symbols, and
- performing actions based on the interaction with the displayed symbols.

25. Method for community-based communication between a first mobile node and at least one second mobile node comprising the steps of
- registering at least one community member, that comprises in the manual registration mode the steps of searching reachable mobile nodes, receiving at least one message from at least one found mobile node, exchanging at least one identification and/or at least one option with the at least one found mobile node, displaying the at least one identification and/or the at least one option to the user, selecting one of the at least one found mobile node, accepting to register the at least one found mobile node as a community member by the user, and/or sending a user identification and a time of validity of the user identification,
- storing a list of registered community members,
- recognizing reachable community members,
- displaying symbols representing recognized community members,
- interacting with the displayed symbols, and
- performing actions based on the interaction with the displayed symbols.

## Amended claims

### Amended claims in accordance with Rule 86(2) EPC.

**1.** Apparatus for community-based communication between at least two mobile nodes (3501, 3502, A, B, C), a first of the mobile node (3501) comprising
- a control unit (3503) comprising a data processing means,
- an inputting means (3504),
- a displaying means (3505),
- a memory unit (3506),
- means for communicating (3507) between a first mobile node (3501) and at least a second mobile node (3502),
wherein
- the control unit (3503) allows to register at least one community member,
- the memory unit (3506) comprises a list of registered community members,
- the control unit (3503) recognizes reachable community members using the means for communicating and using a filtering mechanism comprising the steps of
- receiving at least one message from at least a second mobile node comprising an identification of the mobile node,
- comparing the identification with the identifications of the community members that are registered in the list of registered community members,
- determining whether the received message was sent by a registered community member based on the comparison, and/or
- further processing the received message if it was sent by a registered
community member,
- the displaying means (3505) displays symbols representing recognized community members,
- the inputting means (3504) allows to interact with the displayed symbols, and
- the control unit (3503) performs actions based on the interaction with the displayed symbols and wherein the control unit (3503) establishes a communication with the community member that is represented by the symbol with which the user interacted using the inputting means (3504).

**2.** Apparatus according to at least one of the preceding claims, wherein the control unit (3503) further allows to deregister community members.

**3.** Apparatus according to at least one of the preceding claims, wherein the inputting means (3504) further allows to input an identification of a user of the apparatus, a time of validity of the identification of the user, and/or a time of validity of an identification of at least one mobile node.

**4.** Apparatus according to at least one of the preceding claims, wherein the memory unit (3506) stores an identification of the first mobile node, an identification of the user, a time of validity of the identification of the user, and/or a time of validity of the identification of the first mobile node.

**5.** Apparatus according to at least one of the preceding claims, wherein the means for communicating (3507) broadcasts an identification of the first mobile node, an identification of the user, a time of validity of the identification of the user, a time of validity of the identification of the first mobile node and/or options.

**6.** Apparatus according to at least one of the preceding claims, wherein the means for communicating (3507) receives an identification of the second mobile node, an identification of the user of the second apparatus, a time of validity of the identification of the user using the second apparatus, a time of validity of the identification of the second mobile node and/or options.

**7.** Method for community-based communication between a first mobile node (3501) and at least one second mobile node (3502) comprising the steps of
- registering at least one community member,
- storing a list of registered community members,
- recognizing reachable community members using a filtering mechanism comprising the steps of
- receiving at least one message from at least one second mobile node comprising an identification of the mobile node,
- comparing the identification with the identifications of the community members that are registered in the list of registered community members,
- determining whether the received message was sent by a registered community member based on the comparison, and/or
further processing the received message if it was sent by a registered community member,
- displaying symbols representing recognized community members,
- interacting with the displayed symbols, and
- performing actions based on the interaction with the displayed symbols.

**8.** Method for community-based communication according to at least one of the claims 7 to 8, wherein the step of registering at least one community member comprises in the automatic registration mode the steps of
- searching reachable mobile nodes,
- receiving at least one message from at least one found mobile node,
- exchanging at least one identification and/or at least one option with the at least one found mobile node,
- displaying the at least one identification and/or the at least one option to the user, and/or
- accepting to register the at least one found mobile node as a community member by the user.

**9.** Method for community-based communication according to claim8,
wherein the control unit (3503) discards received messages that are received before the starting of searching reachable mobile nodes and/or that are received later than a predetermined period of time after the starting of searching reachable mobile nodes.

**10.** Method for community-based communication according to at least one of the claims 8 to 9, wherein the step of accepting to register the at least one found mobile node as a community member by the user in the manual registration mode further comprises the steps of selecting one of the at least one found mobile node and/or sending a user identification and a time of validity of the user identification.

**11.** Method for community-based communication according to at least one of the claims 7 to 8, wherein the step of registering at least one community member comprises the steps of
- receiving an invitation to be a member of a community comprising at least one identification and/or a time of validity of the identification and/or at least one option of the inviting node,
- displaying the at least one identification and/or the time of validity of the identification and/or the at least one option to the user,
- accepting to register the inviting node as a community member by the user, and/or
- sending at least one identification and/or the time of validity of the identification and/or at least one option to the inviting node.

**12.** Method for community-based communication according to at least one of the claims7 to 11, wherein the control unit (3503) deletes community members from the list of registered community members when the time of validity of the identification of the community members has expired.

**13.** Method for community-based communication according to at least one of the claims 7 to 12, wherein the user is enabled to delete community members from the list of registered community members using the inputting means (3504) employing the steps of
- displaying the community members that are registered in the list,
- selecting at least one community member from the list by the user, and/or
- triggering a deletion of the at least one selected community member from the list of registered community members.

**14.** Method for community-based communication according to at least one of the claims7 to 13, wherein the step of displaying symbols representing recognized community members comprises the steps of
- receiving a position of at least one recognized community member,
- calculating a position on the display that corresponds to the position of the at least one recognized community member, and/or
- displaying at least one symbol representing the at least one recognized community member at the calculated position.

**15.** Vehicle including an apparatus according to at least one of the claims 1 to 8.

**16.** Computer software product for community-based communication between a first mobile node and at least one second mobile node, the computer software product being adapted, when loaded into a memory and processed by a data processing means to perform a method according to at least one of the claims 7 to 14.

**17.** Use of the computer software product according to claim 16 on a mobile node being a mobile electronic device, a mobile computer, a personal digital assistant, a laptop, a notebook, a smartphone, and/or a mobile phone.

**18.** Method for community-based communication according to claim 7, **characterized in that** the step of
- registering at least one community member, comprises in the manual registration mode the steps of searching reachable mobile nodes, receiving at least one message from at least one found mobile node, exchanging at least one identification and/or at least one option with the at least one found mobile node, displaying the at least one identification and/or the at least one option to the user, selecting one of the at least one found mobile node, accepting to register the at least one found mobile node as a community member by the user, and/or sending a user identification and a time of validity of the user identification.
